(19) Europäisches Patentamt
European Patent Office
Office européen des brevets

(11) **EP 2 427 350 B1**

(12) **EUROPÄISCHE PATENTSCHRIFT**

(45) Veröffentlichungstag und Bekanntmachung des Hinweises auf die Patenterteilung:
**20.09.2017 Patentblatt 2017/38**

(21) Anmeldenummer: **10722563.3**

(22) Anmeldetag: **06.05.2010**

(51) Int Cl.:
***B60R 21/0136*** *(2006.01)*

(86) Internationale Anmeldenummer:
**PCT/DE2010/000507**

(87) Internationale Veröffentlichungsnummer:
**WO 2010/127665 (11.11.2010 Gazette 2010/45)**

(54) **VERFAHREN ZUR AUFPRALLERKENNUNG BEI KRAFTFAHRZEUGEN MIT MINDESTENS EINER KÖRPERSCHALLERZEUGUNGSEINRICHTUNG**

METHOD FOR CRASH RECOGNITION FOR VEHICLES HAVING AT LEAST ONE SOUND GENERATOR

MÉTHODE PUR LE DÉTECTION D'UN COLLISION D'UN VÉHICULE COMPRENANT DE MOINS UN GÉNÉRATEUR DE SON

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **06.05.2009 DE 102009019847**
**21.08.2009 DE 102009038430**

(43) Veröffentlichungstag der Anmeldung:
**14.03.2012 Patentblatt 2012/11**

(73) Patentinhaber:
• **Continental Automotive GmbH**
**30165 Hannover (DE)**
• **Hochschule für angewandte Wissenschaften FH Ingolstadt**
**85049 Ingolstadt (DE)**
• **PROCITEC GmbH**
**75179 Pforzheim (DE)**

(72) Erfinder:
• **FESER, Michael**
**93092 Barbing (DE)**
• **BRANDMEIER, Thomas**
**93173 Wenzenbach (DE)**
• **LAUERER, Christian**
**85077 Manching (DE)**
• **BRANDMEIER, Gerd**
**75038 Oberderdingen (DE)**

(74) Vertreter: **Büchner, Jörg**
**Conti Temic microelectronic GmbH**
**Patente & Lizenzen**
**Sieboldstraße 19**
**90411 Nürnberg (DE)**

(56) Entgegenhaltungen:
**DE-A1- 10 034 524      DE-A1- 10 245 780**
**DE-A1-102007 008 379**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Aufprallerkennung bei Kraftfahrzeugen mit mindestens einer Körperschallerzeugungseinrichtung gemäß dem Oberbegriff von Anspruch 1.

Bei der Erkennung von Unfallsituationen von Personenkraftwägen stellt die Körperschallmessung eine neue Technologie dar. Das Airbagsteuergerät wertet die in einem Crash entstehenden Struktur- bzw. Körperschallschwingungen aus und ermöglicht eine schnelle, zielgerichtete Auslösung der Rückhaltemittel.

Die Entstehung der auswertbaren Körperschallschwingungen hängt stark von der Konstruktion des Fahrzeugvorderwagens ab. Jedes neue, mit der Körperschall-Technologie auszustattende Fahrzeug muss sehr aufwändig in Hinblick auf Körperschallentstehung sowie Übertragung untersucht werden. Dies liegt im Beispiel des Frontalcrashs hauptsächlich an der fehlenden Standardisierung der Stoßfängersysteme. Jeder Fahrzeughersteller entwickelt für jedes neue Fahrzeug separate Typschaden- und Stoßfängerelemente, deren Konstruktion die Krafteinleitung und damit die Körperschallanregung des Fahrzeugs im Crashfall bestimmt.

Zur Verbesserung der Crashdiskriminierung auf Basis der Körperschallauswertung soll ein mechanisches Element (aCISS-Element) in die Fahrzeugstruktur eingebracht werden, das gezielt charakteristisch und deterministisch Körperschall während der Deformation erzeugt. Die Information über die Geschwindigkeit der Deformation wird dem Körperschallsignal durch das mechanische Element aufgeprägt. Die a-priori-Kenntnisse über die Anregung durch das Element sollen dann zur verbesserten Gewinnung von Merkmalen, welche die Crashklassifikation unterstützen bzw. ermöglichen, im AirbagSteuergerät verwendet werden.

Aus der DE 10 2008 020 186 A1 ist bereits ein derartiges aCISS-Element bestehend aus einer Mehrzahl von Körperschall-erzeugenden Einzelelementen bekannt, was sich bereits ganz grundlegend von der aktiven Erzeugung eines Einzelimpulses gemäß der DE 10 2008 002 549 A1 unterscheidet, da letztgenannter Anmeldung eben nur ein einziges breitbandiges Körperschallsignal erzeugt wird und gerade keine Überlagerung einer Vielzahl von Einzelimpulsen erfolgt.

Bei der Deformation des Vorderwagens werden gezielt Strukturanregungen erzeugt, die Aufschluss über die relative Deformationsgeschwindigkeit und damit die Einschätzung des Gefahrenpotentials der Unfallsituation geben können.

Für mögliche Details der Ausgestaltung eines solchen aktiven Körperschallelements wird beispielsweise auf die Anmeldung DE 10 2008 020 186 verwiesen. Aus der DE 102 45 780 A1 ist eine Vorrichtung zur Aufprallerkennung mittels Körperschall in einem Fahrzeug bekannt. Im Fahrzeug treten niederfrequente Störungen auf, die beispielsweise über die Räder oder andere bewegte Teile in die Karosse eingeleitet werden. Die Amplituden dieser niederfrequenten Beschleunigungen sind unter Umständen sehr hoch. Daraus lässt sich folgern, dass die verwendeten Nutzsignale zur Übertragung durch die Karosserie im höheren Frequenzbereich angesiedelt sein müssen.

Die Fahrzeugkarosserie besteht aus vielen Einzelteilen komplexer Geometrie mit Kanten und Verbindungen, die vorwiegend dünnwandig ausgeprägt sind. In diesem inhomogenen Ausbreitungsmedium werden zwangsweise Biegewellen angeregt, welche die dominierende Wellenart darstellen. Diese Biegewellen haben die Eigenschaft der frequenzabhängigen Ausbreitungsgeschwindigkeit (Dispersion). Dadurch, sowie durch Mehrfachreflexionen und dem Zusammenwirken mehrerer paralleler Ausbreitungspfade werden Signale verzerrt.

Signalfolgen bestehend aus breitbandigen Einzelereignissen, wie sie bisher für die Erzeugung durch das mechanische aCISS-Element vorgesehen waren, werden verschliffen. Die sequenziellen Einzelereignisse der Pulsfolge überlagern sich zu einer komplizierten Zeitfunktion. Diese Eigenschaft grenzt eine Vielzahl von möglichen Signalen und Verarbeitungsmethoden aus. Breitbandige Signale eignen sich demnach kaum für die Anwendung bei aktiver Körperschallanregung (aCISS). Rechtecksignale und Impulse weisen eine solche breitbandige Charakteristik auf und sind demzufolge ungeeignet.

Da die Transferfunktion der mechanischen Übertragung durch die Karosserie einen stark welligen Verlauf aufweist, der durch Resonanzüberhöhungen und Auslöschungsstellen geprägt ist, wird eine Übertragung der Geschwindigkeitsinformation über die Amplitude der Schwingungen stark erschwert.

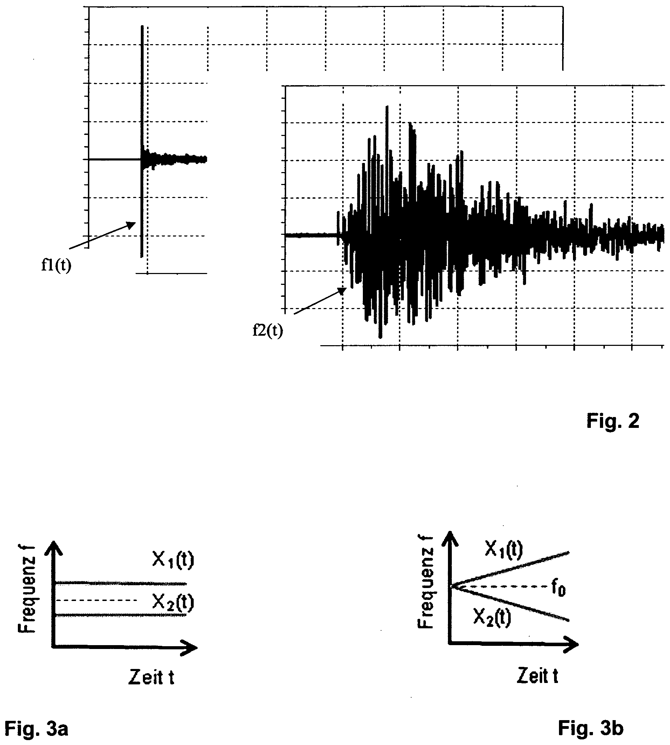

Fig. 2 skizziert die extrem stark verschliffene Strukturantwort, wie diese von einem Körperschallsensor im Zentralbereich des Fahrzeugs erfasst werden kann, auf eine impulsförmige Anregung.

Aufgabe der Erfindung ist es daher, Möglichkeiten für die Aufprallerkennung anzugeben, bei denen dennoch die Aufprallgeschwindigkeit ermittelt werden kann. Zudem werden entsprechend weiterentwickelte Körperschallerzeugungsvorrichtungen sowie eine Aufpralleinrichtung zur Durchführung des Verfahrens vorgestellt.

Diese Aufgabe wird durch die Merkmale der unabhängigen Ansprüche gelöst. Vorteilhafte Weiterbildungen der Erfindung ergeben sind aus den Unteransprüchen, wobei auch Kombinationen und Weiterbildungen einzelner Merkmale miteinander denkbar sind.

Ein wesentlicher Gedanke der Erfindung besteht darin, dass beim Aufprall zumindest zwei deterministische, also definierte Körperschallsignale bzw. Körperschallschwingungen erzeugt werden, wobei diese jeweils von der Aufprallgeschwindigkeit abhängig und zudem voneinander unterscheidbar sind. Die Begriffe Körperschallsignal und Körperschallschwingung sind im Zusammenhang mit dieser Erfindung synonym, da ja Schwingungen allgemein als wiederkehrend amplitudenveränderliche Signale zu verstehen sind, die hier in jedem Fall erzeugt werden, wobei die Frequenz bzw. Periodendauer durchaus veränderlich sein kann, d.h. eben neben einer harmonischen Schwingung auch veränderliche Periodendauern verwendet werden können. Während bei einem klassischen Aufprall jedoch immer ein breitbandiges, stochastisches Körperschallsignal erzeugt wird, welches zwar innerhalb des Spektrums als eine Vielzahl unterschiedlicher Schwingungen verstanden werden kann, so ist dies doch als ein einheitliches Signal zu verstehen, denn es sind die dabei entstehenden Schwingungen voneinander untrennbar mit dem einen einzigen Anregungsvorgang verbunden. In der vorliegenden Erfindung wird nicht nur ein, sondern mindestens zwei unabhängige Körperschallsignale aktiv erzeugt. Die Körperschallsignale sind insbesondere auch deterministisch, d.h. es kann deren Verhalten, insbesondere Frequenzverhalten, ausdrücklich in Abhängigkeit von der Aufprallgeschwindigkeit vorbestimmt, vorher gesagt und dementsprechend aus dem Körperschallsignal auch die Aufprallgeschwindigkeit abgeleitet werden. So weist die Körperschallerzeugungseinrichtung eine erste Körperschall-anregende Einheit zur mechanischen Erzeugung des ersten deterministischen Körperschallsignals und eine davon unterschiedliche zweite Körperschall-anregende Einheit zur Erzeugung des zweiten deterministischen Körperschallsignals auf.

Durch diese zumindest zwei Körperschall-anregenden Einheiten entstehen tatsächlich zwei voneinander unabhängige und deterministisch vorbestimmte Körperschallsignale, wenngleich beide von der Aufprallgeschwindigkeit abhängig sind.

Die Körperschall-anregende Einheit besteht beispielsweise aus einer Mehrzahl von Körperschall-erzeugenden Einzelelementen, welche nacheinander aktiviert und durch Überlagerung der dabei jeweils entstehenden Schallimpulse aus der Folge von Schallimpulsen das von der Geschwindigkeit der Deformation abhängige Körperschallsignal entsteht.

Alternativ dazu kann ein mechanisch schwingfähiges Element sowie eine Mehrzahl von mechanischen Anregungselementen vorgesehen sein, welche so zueinander angeordnet sind, daß durch einen Zusammenstoß des Fahrzeugs mit einem Kollisionsobjekt die Anregungselemente oder das schwingungsfähige Element in Aufprallrichtung relativ zueinander mechanisch verschoben werden und die Anregungselemente jeweils eine mechanische Anregung des schwingfähigen Elements bewirken und aus der Folge von Anregungen des schwingfähigen Elements das von der Geschwindigkeit der Deformation abhängige Körperschallsignal entsteht.

In diesen beiden vorgenannten Fällen entsteht das für die Aufprallgeschwindigkeit charakteristische und deterministische Körperschallsignal jeweils durch Überlagerung einer Vielzahl von in ihrem zeitlichen Abstand bestimmten Einzelimpulsen. Während jedoch Einzelimpulse auch bei ihrer Überlagerung neben der gewünschten Signal Frequenz auch einen deutlichen Anteil an hochfrequenten Störungen mit erzeugen, kann alternativ dazu vergleichbar dem Wirkprinzip einer Schallplatte mit einem mechanisch schwingfähigen Element sowie einer kontinuierlichen, bspw. amplituden- und/oder frequenz- und/oder phasenveränderlichen mechanischen Anregungsstruktur vorteilhaft eine sehr wenig störbelastete Schwingung erzeugt werden. Schwingfähiges Element und die kontinuierliche, mechanische Anregungsstruktur sind so zueinander angeordnet, daß beim Aufprall des Fahrzeugs die Anregungsstruktur oder das schwingungsfähige Element in Aufprallrichtung relativ zueinander mechanisch verschoben werden und die Anregungsstruktur eine kontinuierliche mechanische Anregung des schwingfähigen Elements bewirkt und aus dieser Anregung des schwingfähigen Elements das von der Geschwindigkeit der Deformation abhängige Körperschallsignal entsteht. Während also bei einer Schallplatte durch Drehung der Schallplatte die stehende Nadel in einer in ihrer Tiefe oder Form der Seitenwand strukturierten Rille geführt wird, wird durch den Aufprall die Relativbewegung erzeugt, durch die das schwingungsfähige Element bzw. die Anregungsstruktur lateral zueinander verschoben werden.

Im Gegensatz zu den beiden erstgenannten Beispielen kann so eine kontinuierliche Anregung und dementsprechend relativ oberwellen- und störanteilsfreie Schwingung in die Nadel eingeprägt werden.

Gemeinsam ist diesen hier beschriebenen Ausführungsbeispielen aber, dass durch eine solche Körperschallanregende Einheit immer ein deterministisches Körperschallsignal erzeugt wird und durch die unterschiedliche Ausgestaltung zweier solcher Körperschallanregender Einheiten auch ganz gezielt 2 unterschiedliche, deterministische Körperschallsignale erzeugt werden.

Diese Körperschallschwingungen werden vom Sensor erfasst und daraus die Aufprallgeschwindigkeit ermittelt. Durch die Erzeugung zweier bekannter und unterscheidbarer Körperschallschwingungen, die wiederum beide von der Aufprallgeschwindigkeit abhängig sind, kann eine Ermittlung der Aufprallgeschwindigkeit aus der Relation der ja an sich bekannten Körperschallschwingungen relativ zueinander gewonnen werden, ohne dass die Aufprallgeschwindigkeit unmittelbar errechnet werden muss. Da sich die Körperschallschwingungen im Fahrzeug überlagern, kann die Auswertung insbesondere auf die Überlagerung dieser beiden Schwingungen, insbesondere auf niederfrequente Anteile in diesem gemischten Signal ausgerichtet werden.

In der Fahrzeugaußen - insbesondere Vorderwagenstruktur erfolgt die gezielte Erzeugung schmalbandiger Schwingungssequenzen (optimaler Weise näherungsweise harmonischer Schwingungen). So kann in einem Beispiel deren Grundfrequenz abhängig von der relativen Deformationsgeschwindigkeit in der Anfangsphase des Crashs sein. Die Signale können an unterschiedlichen Orten in die Struktur eingekoppelt werden. Im Fall von mehreren Signalen können sich diese als Resultat des mechanischen Verhaltens der Struktur additiv überlagern.

Dabei kann die Geschwindigkeit des Aufpralls in der betrachteten Anfangsphase des Crashs ebenfalls als konstant angenommen werden.

Da Körperschallsignale grundsätzlich gegenüber Beschleunigungssignalen höherfrequente Frequenzanteile aufweisen, erweist sich eine direkte Abtastung und Ableitung der Trägerfrequenz als äußerst aufwendig.

Aus diesem Grund werden zumindest zwei voneinander in bekannter Weise unterscheidbare Körperschallsignale mit möglichst schmalbandiger Charakteristik erzeugt. Andere Spektralanteile lassen sich technisch natürlich nicht vermeiden. Ziel ist es aber, zumindest signifikante schmalbandige Schwingungen zu erzeugen, die von den sonstigen Körperschallschwingungen sowie natürlich auch untereinander unterscheidbar sind.

Die Körperschallschwingungen sind dabei so ausgebildet, dass die Frequenzen beider Körperschallsignale von der Aufprallgeschwindigkeit abhängig sind und diese signaltheoretisch als eine gemeinsame Grundfrequenz und voneinander abweichende Modulationen dieser Grundfrequenz aufgefasst werden können. Dabei wird vorzugsweise aus den Körperschallschwingungen die Grundfrequenz und aus dieser die Aufprallgeschwindigkeit ermittelt. So können die Körperschallschwingungen beispielsweise durch Frequenzmodulation mit jeweils einem fest vorgegebenen unterscheidbaren Frequenzfaktor erzeugt werden, d.h. die Körperschallschwingungen unterscheiden sich um einen festen Frequenzfaktor voneinander.

Alternativ können die zumindest zwei Körperschallschwingungen so erzeugt werden, dass signaltheoretisch eine Frequenzmodulation als Frequenzrampe mit einander entgegen gesetzter Flankenrichtung aus der fiktiven Grundfrequenz entsteht, d.h. bei einer Körperschallschwingung nimmt die Frequenz über den Deformationsweg zu, bei der anderen ab.

Die zumindest zwei Körperschallschwingungen werden in der Regel bei der Übertragung durch die Fahrzeugkarosserie überlagert, da sich der Körperschallsensor beabstandet von den Körperschallerzeugungsvorrichtungen befindet, beispielsweise zentral im Fahrzeugtunnel. Das so am Körperschallsensor empfangene Signal wird quadriert und ein vorgegebener Frequenzanteil dieses quadrierten Signals, vorzugsweise ausschließlich der dabei entstehende niederfrequente Signalanteil, ausgewertet. So kann aus den an sich hochfrequenten Körperschallsignalen durch eine Frequenzumsetzung in einen Frequenzbereich erreicht werden, in welchem auch das konventionelle Beschleunigungssignal ausgewertet wird. Dadurch kann die gleiche Auswerteeinheit und Signalverarbeitungsstruktur auf beide Signale angewendet werden.

Eine anspruchsgemäße Körperschallerzeugungseinrichtung zur Durchführung eines Verfahrens erzeugt somit beim Aufprall zumindest zwei Körperschallschwingungen, wobei die Körperschallschwingungen jeweils von der Aufprallgeschwindigkeit abhängig und zudem voneinander unterscheidbar sind. Der Begriff der Körperschallerzeugungseinrichtung schließt dabei auch eine Mehrzahl von Einzelelementen ein, die jeweils Körperschall erzeugen.

Die Aufprallerkennungsvorrichtung als Komplettsystem im Fahrzeug weist daher zumindest eine Körperschallerzeugungsvorrichtung im äußeren, beispielsweise vorderen Bereich des Fahrzeugs auf, welche zumindest zwei voneinander unterscheidbaren Körperschallschwingungen in Abhängigkeit der Aufprallgeschwindigkeit des Fahrzeugs auf ein Hindernis erzeugt. Zudem ist eine Sensor- und Auswerteeinrichtung vorgesehen, die erzeugten Signale aufnimmt und daraus die Aufprallgeschwindigkeit ermittelt.

Die Erfindung wird nun nachfolgend anhand von Ausführungsbeispielen unter Zuhilfenahme der Figuren näher erläutert. Im Folgenden können funktional gleiche und/oder gleiche Elemente mit den gleichen Bezugsziffern bezeichnet sein. Es zeigen

Fig. 1: Skizzen von Körperschallerzeugungseinrichtungen und dabei erzeugten Schwingungen

Fig. 2: Impulsförmige Einzelanregung an der Fahrzeugfront und die davon am Sensor in bzw. an der zentralen Steuereinheit messbaren Schwingungen.

Fig.3 Skizzen möglicher Frequenzmodulationen zweiter Körperschallsignale abhängig von der Aufprallgeschwindigkeit

Fig. 4 Blockbild der Signalverarbeitung

Fig. 5 Blockskizze des gesamten Signalflusses

Fig. 6 Amplitudenspektrum bei zwei unterschiedlichen Aufprallversuchstypen

Fig. 7 Amplitudenspektrum bei zwei unterschiedlichen Aufprallversuchstypen und Demodulation mittels Quadratur

Fig. 8 Bewertung des Amplitudenspektrums durch Bandpassfilter

Fig. 9    Skizze einer Körperschall erzeugenden Anregungseinheit nach dem Prinzip einer zwangsgeführten Nadel vergleichbar dem Schallplattenprinzip

Fig. 10    Skizze einer Anregung mit einem entgegensinnig verlaufenden rampenförmigen Frequenzverlauf

Fig. 11    Skizze der Abhängigkeit der erzeugten Körperschallfrequenz von der Aufprallgeschwindigkeit

Fig. 12    Kraftfahrzeug mit zwei räumlich beabstandeten Körperschallerzeugungsvorrichtungen

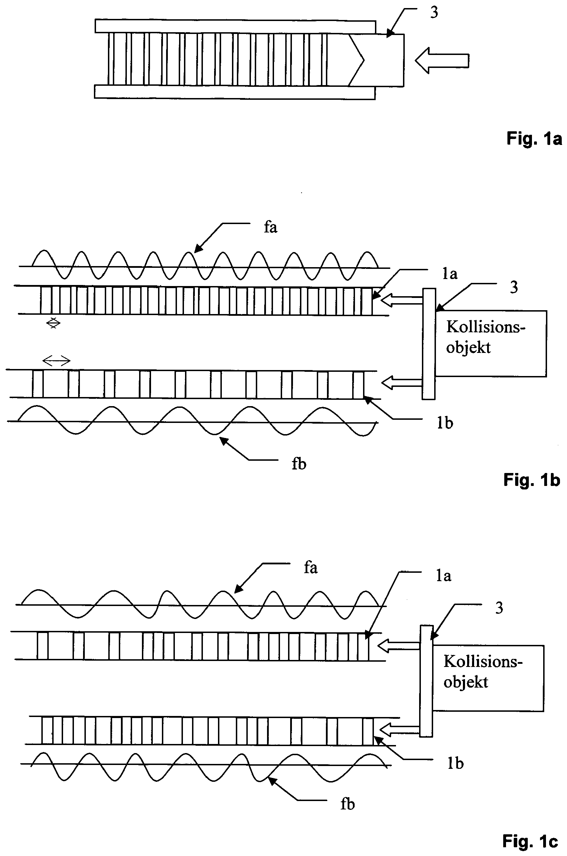

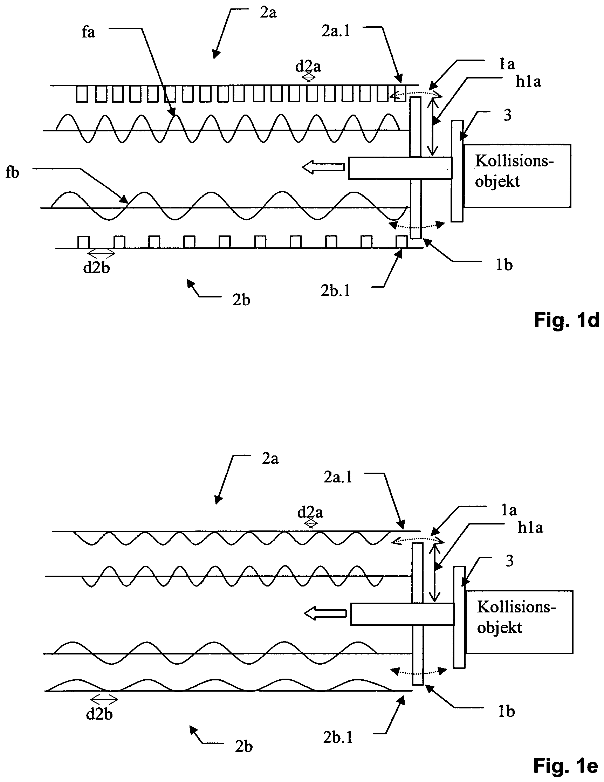

Figur 1 zeigt skizzenhaft und schematisch vereinfacht Ausführungsbeispiele eines Körperschallelements mit einer Vielzahl von Einzelanregungselementen auf, deren Steifigkeit und Abstand so abgestimmt ist, dass über die Vielzahl der Einzelanregungselemente der gewünschte Frequenzverlauf erzeugt wird. Hierzu zeigt Bild 1b und 1c nur beispielhaft skizzenhaft entsprechend gestaltete Körperschallelemente sowie die entstehenden Schwingungen.

Vorzugsweise werden beispielsweise zu im wesentlichen harmonische Schwingungen mit einem bekannten, zueinander unterscheidbaren Frequenzverhältnis erzeugt, wie in Bild 1b skizzenhaft angedeutet, wobei bei beiden Schwingungen quasi eine gleiche, von der Aufprallgeschwindigkeit beeinflusste und an sich unbekannte Grundfrequenz sowie ein aber bekannter konstanter Frequenzfaktor, hier in etwa Faktor 2 vorliegen, so dass aus der bekannten Relation und den zwei Körperschallschwingungen dann vorzugsweise eine fiktive Grundfrequenz und daraus die Aufprallgeschwindigkeit abgeleitet werden kann.

Die Frequenz der Anregung lässt sich alternativ beispielsweise auch über der Zeit bzw. abhängig vom Deformationsweg variabel gestalten (sogenannte Sweep- bzw. Chirp-Signale). Bild 1c zeigt zwei zueinander gegenläufige Frequenzrampenmodulationen, bei denen ebenfalls aus dem bekannten Verhältnis zueinander auf die an sich unbekannte Aufprallgeschwindigkeit geschlossen werden kann.

Die Körperschall-anregende Einheit besteht in Figur 1a bis 1c aus einer Mehrzahl von Körperschall-erzeugenden Einzelelementen, welche nacheinander als Folge von Einzelbolzen abgeschert werden und durch Überlagerung der dabei jeweils entstehenden Schallimpulse aus der Folge von Schallimpulsen das von der Geschwindigkeit der Deformation abhängige Körperschallsignal entsteht.

Alternativ dazu kann, wie in Figur 1d) skizzenhaft dargestellt, ein 1. und ein 2. mechanisch schwingfähiges Element (1a,1b) sowie jeweils eine 1. Gruppe und eine 2. Gruppe von mechanischen Anregungselementen (2a,2b) vorgesehen sein. Dabei sind die frequenzrelevanten Eigenschaften der 1. Gruppe, hier insbesondere der Abstand d2a der Einzelelemente voneinander, von denen frequenzrelevanten Eigenschaften der 2. Gruppe, hier insbesondere der Abstand d2b der Einzelelemente voneinander unterschiedlich, so dass trotz des einheitlich erfolgenden Anregungsvorgangs durch Relativbewegung in Abhängigkeit von der Aufprallgeschwindigkeit zwei zueinander unterschiedliche deterministische Körperschallsignale entstehen.

Die schwingfähigen Elemente und die Gruppen mechanischer Anregungselemente sind nämlich so zueinander angeordnet, dass durch einen Aufprall des Fahrzeugs die Anregungselemente oder das schwingungsfähige Element in Aufprallrichtung relativ zueinander mechanisch verschoben werden und die Anregungselemente jeweils eine mechanische Anregung des schwingfähigen Elements bewirken und aus der Folge von Anregungen des schwingfähigen Elements das von der Geschwindigkeit der Deformation abhängige Körperschallsignal entsteht.

Alternativ dazu kann vergleichbar dem Wirkprinzip einer Schallplatte mit einem mechanisch schwingfähigen Element sowie einer kontinuierlichen, amplitudenveränderlichen mechanischen Anregungsstruktur vorteilhaft eine sehr wenig störbelastete Schwingung erzeugt werden, die in Figur 1e skizzenhaft verdeutlicht werden soll. Schwingfähiges Element und die kontinuierliche, amplitudenveränderliche, mechanische Anregungsstruktur sind so zueinander angeordnet, dass beim Aufprall des Fahrzeugs die Anregungsstruktur oder das schwingungsfähige Element in Aufprallrichtung relativ zueinander mechanisch verschoben werden und die Anregungsstruktur eine kontinuierliche mechanische Anregung des schwingfähigen Elements bewirkt und aus dieser Anregung des schwingfähigen Elements das von der Geschwindigkeit der Deformation abhängige Körperschallsignal entsteht. Die durch das schwingungsfähige Element 1a bzw. 1b abgefahrene Wellenstruktur 2a.1, 2b.1 weist wiederum eine für das jeweilige Element charakteristische Periodendauer ($4*d2a$ bzw. $4*d2b$) auf. In Figur 1e ist dies als Prinzip einer Tiefenschrift ausgestaltet, wie dies bei alten Mono-Schallplatten teilweise üblich war.

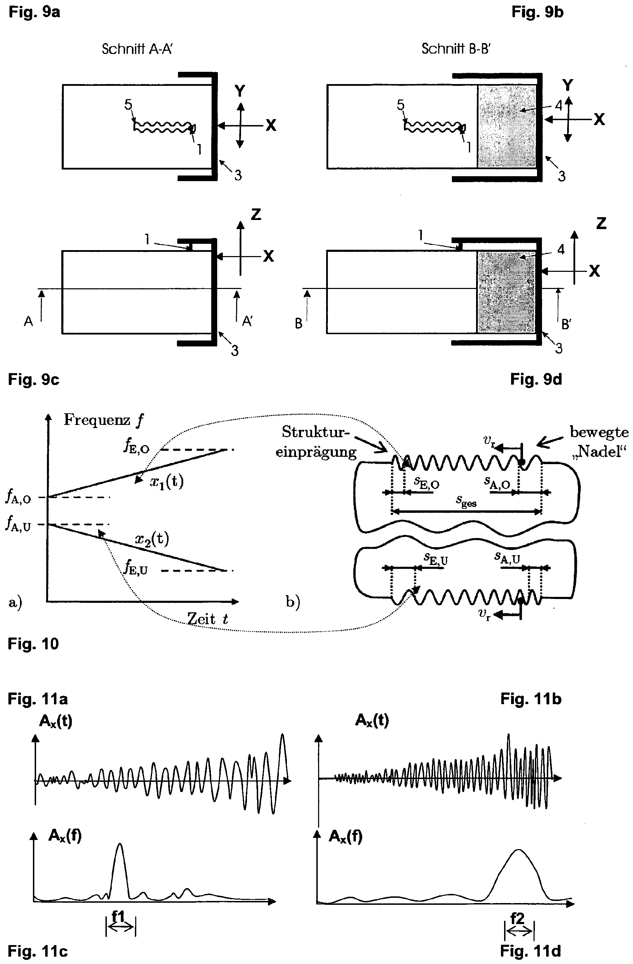

Demgegenüber skizziert Figur 9 ebenfalls nach dem Wirkprinzip einer Schallplatte aufgebaut ein alternatives mechanisches Konzept, bei denen das schwingfähige Element 1 bei seiner Bewegung in Aufprallrichtung X in einer dazu in Querrichtung Y verlaufenden Wellenstruktur 5 zwangsgeführt in eben diese Querrichtung Y ausgelenkt wird. Dieser Aufbau weist Ähnlichkeit mit der Seitenschrift bei Schallplatten auf. Das schwingfähige Element 1 wird dabei in Z-Richtung sicher in der Wellenstruktur 5 gehalten. Eine solche Ausgestaltung den besonderen Vorteil, dass diese einen sehr gleichmäßige und kontinuierliche Anregung im genau die eine vorgegebene Schwingungsrichtung, hier als Y bezeichnet, sicherstellt. Für das erfindungsgemäße Verfahren werden dabei jeweils zumindest 2 schwingfähige Elemente durch jeweils eine von der anderen abweichende Wellenstruktur 5 geführt.

Die Wellenstruktur 5 muss dabei keineswegs nur eine harmonische Sinusschwingung sein, sondern kann beispielsweise auch eine über die Zeit veränderliche Periodendauer einprägen, wie dies in Figur 10 näher skizziert wird.

Die Fig. 3 stellt einige bevorzugte Anregungsarten anhand von Beispielen dar. So kann gemäß Fig. 3a beispielsweise ein definiertes Frequenzverhältnis zwischen den beiden Körperschallsignalen vorgegeben werden, was signaltheoretisch als erste und zweite Modulation einer Trägerfrequenz betrachtet werden kann, wobei die Schwingungen sich damit durch einen festen Faktor voneinander unterscheiden unabhängig von der eigentlichen Trägerfrequenz.

Die Trägerfrequenz ist ihrerseits abhängig von der Aufprallgeschwindigkeit und es kann über das bekannte Verhältnis der beiden Modulationen die Aufprallgeschwindigkeit abgeleitet werden.

Im Fall der in Fig. 3b gezeigten Rampenfunktion, eines sogenannten Sweeps ist die Frequenz $\omega$ eine Funktion der Zeit bzw. des Deformationsweges. Durch Ableitung von y erhält man mit $\dot{y}=\omega\sin(\omega t+\phi)$ ein Signal, dessen Amplitude von der Frequenz der eingekoppelten Schwingung abhängt. Dies wurde bereits im Zusammenhang mit Figur 10 kurz erläutert.

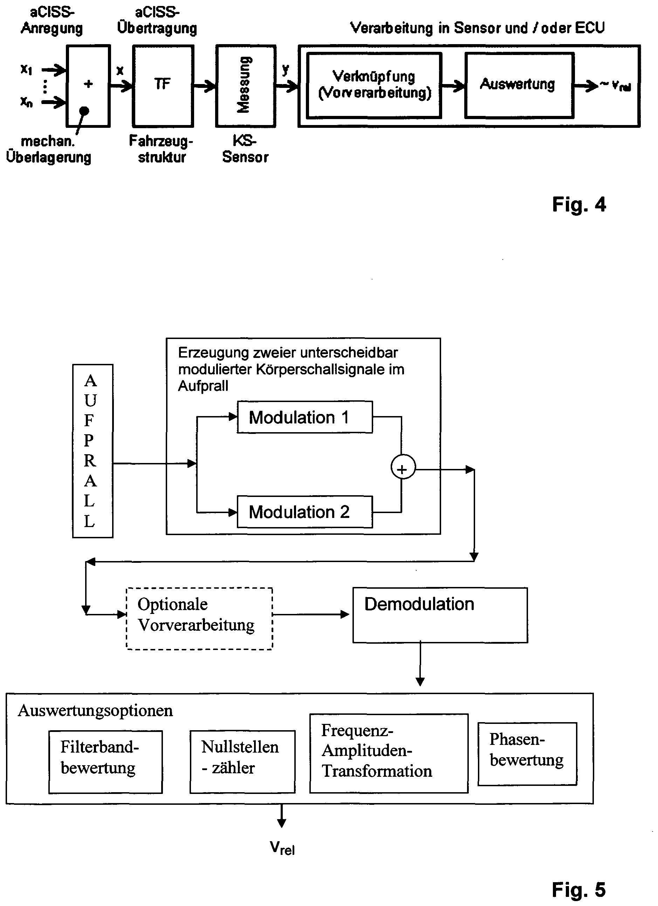

Die Fig. 4 zeigt in einer Blockskizze die Signalverarbeitung. Die Fahrzeugkarosserie wirkt als Übertragungsmedium der sich ergebenden Körperschallwellen. Die von den Einzelelementen der Körperschallerzeugungseinrichtung erzeugten Einzelschwingungen überlagern sich mechanisch während der Ausbreitung im Fahrzeug. Im AirbagSteuergerät oder an anderer geeigneter Stelle an der Karosserie des Fahrzeugs erfolgt die Messung. Dort sitzt ein geeigneter Sensor, der die Strukturvibrationen bzw. den Körperschall aufnimmt.

Anschließend erfolgt deren Verarbeitung und Auswertung mit dem Ziel, die relative Crashgeschwindigkeit vrel zu extrahieren. Der Sensor führt unter Umständen bereits eine Vorverarbeitung durch. Diese kann auch der Datenreduktion vor der Übertragung in die ECU bzw. in den Controller des Airbag-Steuergerätes dienen. Es kann unter Umständen auch bereits im Sensor eine Wandlung in ein digitales Signal erfolgen, so dass die Schnittstelle zwischen dem Sensor und dem Mikrocontroller des Steuergerätes digital ausgeführt sein kann. Bild 4 skizziert den Aufbau eines solchen Systems zur Verarbeitung der Körperschallsignale.

Für die beiden Blöcke Vorverarbeitung und Auswertung (Bild 4) sind in Kombination mit unterschiedlichen Anregungsarten mehrere Verfahren denkbar, von denen im Folgenden einige als Realisierungsbeispiele aufgeführt werden.

In Fig. 5 ist demgegenüber noch mal als Blockskizze die mechanische Erzeugung der voneinander unterscheidbaren Körperschallsignale und deren Überlagerung sowie die optionale Vorverarbeitung und Demodulation sowie die unterschiedlichen Varianten der Signalbewertung zur Ableitung der Aufprallgeschwindigkeit dargestellt.

So skizzieren Figur 11a und 11b den Amplitudenverlauf für eine identische sinusförmige Anregung bei 2 unterschiedlichen Geschwindigkeiten. Die Figur 11a und 11c entspricht dabei einem Aufprall mit niedriger Geschwindigkeit, während die Figur 11b und 11d einen Aufprall mit dem gegenüber höherer Geschwindigkeit zeigen.

Die Figuren 11c und 11d skizzieren nun demgegenüber die spektrale Verteilung im erzeugten Körperschallsignal. Deutlich erkennbar ist dabei, dass ein deutlicher Energiedichtemaximumsbereich f1 bzw. f2 auftritt, also eine klar unterscheidbare deterministische Schwingung herausfilterbar ist und deren Lage f1 bzw. f2 von der Geschwindigkeit des Aufpralls abhängt und daraus abgeleitet werden kann.

Im Folgenden sollen die einzelnen signaltheoretischen Verarbeitungsschritte näher erläutert werden.

## Vorverarbeitung mittels Quadratur

Die Anregung wird im Ausführungsbeispiel gemäß Fig. 3a durch eine oder mehrere harmonische Schwingungen gebildet. Die Frequenzen f1 und f2 der Anregungen x1 und x2 sind dabei proportional der relativen Crashgeschwindigkeit vrel. Es gilt f1 $\neq$ f2.

$$x_1 = \sin(2\pi f_1 t) \ mit \ f_1 \sim k_1 v_r$$

$$x_2 = \sin(2\pi f_2 t) \ mit \ f_2 \sim k_2 v_r$$

Alternativ werden in Fig. 3b bzw. Fig. 10 die Anregungen durch sogenannte Sweep-Funktionen gebildet. Im Fall von mehreren Schwingungen überlagern sich diese zur resultierenden Schwingung x:

$$x = x_1 + x_2$$

Durch eine Quadrierung des aufgezeichneten Körperschallsignals y wird das Informationssignal demoduliert.

$$y^2 = (x_1 + x_2)^2 = (\sin(2\pi k_1 ft) + \sin(2\pi k_2 ft))^2$$

Dadurch entsteht ein Informationssignal in einem anderen Frequenzband. Die Information, die hochfrequent über die Karosserie übertragen wird, ergibt signaltheoretisch einen hochfrequenten Anteil $(k_1+k_2)f$ und einen niederfrequenten Anteil $(k_1-k_1)f$:

$$y^2 \approx \cos(2\pi(k_1 - k_2)ft) - \cos(2\pi(k_1 + k_2)ft)$$

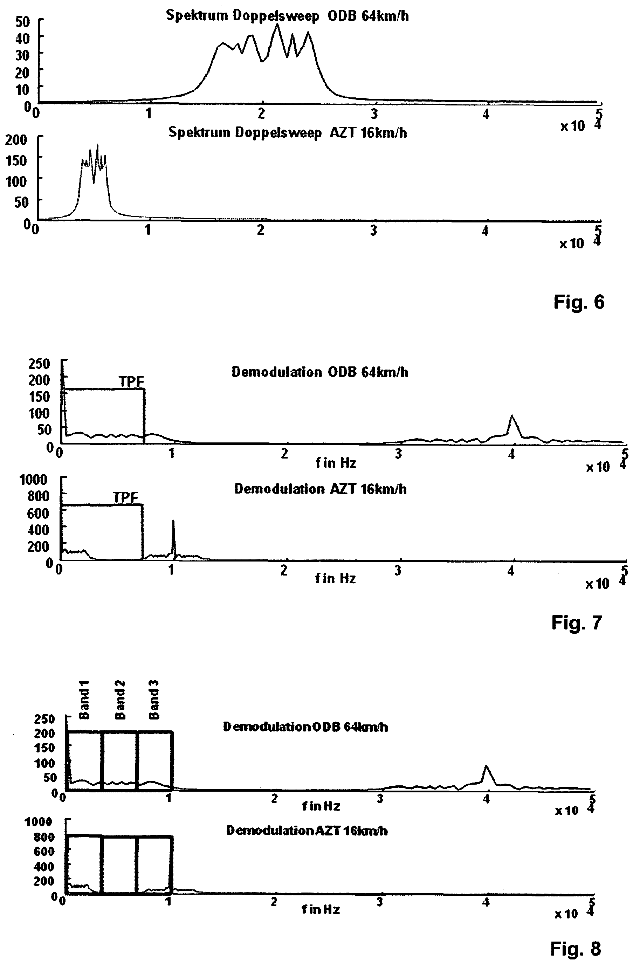

Fig. 7 verdeutlicht in Vergleich zu Fig. 6 dies an einer Simulation für zwei definierte Crashversuche, nämlich einen ODB mit 64km/h und einen AZT mit 16 km/h.

Durch einen Tiefpassfilter (TPF in Fig. 7) wird der vorzugsweise verzichtbare hochfrequente Anteil eliminiert. Der niederfrequente Anteil kann problemlos digital oder analog ausgewertet, insbesondere auch abgetastet und digital an das Steuergerät übertragen und dort ausgewertet werden. Unter Nutzung des aufgrund der mechanischen Realisierung der Anregung festen und bekannten Verhältnisses zwischen k1 und k2 lässt sich auf die Aufprallgeschwindigkeit bzw. Crashschwere zurückschließen. Bestandteil der Vorverarbeitung kann auch eine Filteroperation, beispielsweise eine Bandpassfilterung des Signals vor der Demodulation sein. Da der niederfrequente Anteil bereits von der Trägerfrequenz und damit Aufprallgeschwindigkeit abhängig ist, genügt die Auswertung des niederfrequenten Anteils und kann der hochfrequente Anteil komplett ignoriert und weggefiltert werden.

Alternativ sind natürlich auch noch andere Demodulationsverfahren denkbar. Im Folgenden soll eine optionale Vorverarbeitung vorgestellt werden.

### Inverse Filterung als zusätzliche Vorverarbeitung

Optional lässt sich mit der inversen Filterung eine zusätzliche Vorverarbeitungsstufe zur Unterdrückung der Transfereigenschaften der Fahrzeugkarosse anwenden. Dabei wird die Transferfunktion $H(\omega)$ von dem aCISS-Element zum Ort der Messung als bekannt vorausgesetzt. Die Impulsantwort des Systems lässt sich durch inverse FourierTransformation zu $h^{-1}(t)=F^{-1}\{H(\omega)\}$ gewinnen. Mit der diskreten Faltung in den Grenzen -T und T kann unter vorheriger Diskretisierung der Impulsantwort das Anregungssignal zurückgewonnen werden:

$$x(t) = \sum_{k=-T}^{T} y(k)\, h^{-1}(t - k)$$

Die zurückgewonnene Anregung lässt sich mit den aufgezeigten Methoden verarbeiten um daraus die Information zu gewinnen.

Nachfolgend sollen eine Reihe von Möglichkeiten zur Auswertung der ermittelten Körperschallsignale vorgestellt werden, wobei die Verfahren alternativ oder ergänzend zueinander eingesetzt werden können.

### a) Auswertung der Körperschallsignale mittels Aufteilung in Frequenzbänder

Das vorzugsweise vorverarbeitete Signal lässt sich im relevanten Frequenzbereich durch Bandpassfilterung in mehrere Pfade aufteilen. Durch Verhältnisbildung zwischen den Bändern und Auswertung mit einer einfachen Logik ist die Klassifizierung möglich. Für höhere Anforderungen an die Auflösung lässt sich die Anzahl der Bänder unter Verringerung der Breite erhöhen. Die Berechnung kann sowohl als Vorverarbeitung im Sensor als auch im Controller erfolgen. Eine solche Filterbandbewertung ist als ein Ausführungsbeispiel in Fig. 8 skizziert. Das Verfahren lässt sich bevorzugt optional mit der inversen Filterung als zusätzliche Vorverarbeitungsstufe zur Unterdrückung der Transfereigenschaften der Fahrzeugkarosse anwenden.

### b) Auswertung mittels Nullstellenzählung

Eine Möglichkeit zur Realisierung der Bestimmung der informationstragenden Frequenz im Steuergerät besteht in der Auswertung der Nullstellen des Signals. Diese kann insbesondere auf ein bandpassgefiltertes Signal angewendet werden. Dazu wird in dem vorzugsweise bandpassgefilterten Körperschallsignal die Anzahl der Nullstellen, also Nulldurchgänge bzw. Vorzeichenwechsel des Signals innerhalb eines vorgegebenen Zeitraums erfasst und hieraus auf die Schwingungsfrequenz und damit Aufprallgeschwindigkeit geschlossen. Das Verfahren lässt sich bevorzugt optional mit der inversen Filterung als zusätzliche Vorverarbeitungsstufe zur Unterdrückung der Transfereigenschaften der Fahrzeugkarosse anwenden.

## c) Auswertung mit der Frequenz-Amplituden-Transformation

Ausgehend von einer Anregung $x=\cos(\omega t)$ durch eine harmonische Schwingung oder ein rampenförmiges Sweep-Signal kann an der Messposition grundsätzlich ein Signal $y=\cos(\omega t+\varphi)$ gemessen werden.

Die Amplitude der Ableitung $\dot{y}$ = d/dt(y) lässt sich zur Bestimmung der Anregungsfrequenz und damit von $v_{rel}$ verwenden. Durch Bildung des Betrags und anschließender Tiefpassfilterung des Signals $\dot{y}$ lässt sich eine Datenreduktion erreichen, mit deren Hilfe eine einfache Auswertung der frequenzproportionalen Amplitude im Steuergerät möglich ist. Das Verfahren lässt sich optional mit der inversen Filterung als zusätzliche Vorverarbeitungsstufe zur Unterdrückung der Transfereigenschaften der Fahrzeugkarosse anwenden.

## d) Auswertung durch Nutzung der Phaseninformation der Anregung

An der Messposition wird ein Signal $y=\cos(\omega t)$ gemessen. Durch Manipulation der Phase des Signals, beispielsweise mit einer Phasenschieberkette, durch Addition einer Phasenverschiebung von $\varphi=\pi/2$ lässt sich ein zweites Signal $y_2=\cos(\omega t+\pi/2)=\sin(\omega t)$ erzeugen.

Fasst man signaltheoretisch die beiden Signale y und y2 als Real- und Imaginärteil einer komplexen Zahl auf, so erhält man $y_T=\cos(\omega t)+j\sin(\omega t)$. Der Phasenwinkel der komplexen Zahl lässt sich mit $\varphi=\arctan(\text{Im}(y_T)/\text{Re}(y_T))=\omega t$ gewinnen. Durch Ableitung des Winkels erhält man $\dot{\varphi}=\omega$. Damit lässt sich durch die berechnete Winkeländerung direkt auf die Frequenz und damit auf die relative Geschwindigkeit vrel schließen.

Auch dieses Verfahren lässt sich optional mit der inversen Filterung als zusätzliche Vorverarbeitungsstufe zur Unterdrückung der Transfereigenschaften der Fahrzeugkarosse anwenden.

Alle diese Auswerteverfahren sind natürlich bei den durch Modulation und nachfolgende Mischung und Quadratur gewonnenen Signalen besonders einfach an dem niederfrequenten Signalanteil durchführbar und eignen sich alternativ oder ergänzend zur Bestimmung der Aufprallgeschwindigkeit, welche wiederum als Maß der Crashschwere verwendet und in Abhängigkeit davon Schutzeinrichtungen für Insassen und/oder Kollisionsgegner, insbesondere Fußgänger ausgelöst werden.

Werden also vorzugsweise schmalbandige Trägersignale mit der Geschwindigkeitsinformation frequenzmoduliert, konzentriert sich die Energie weitgehend auf die informationstragenden Bereiche.

Mit Hilfe von Demodulationstechniken lässt sich die Nutzinformation aus dem Signal gewinnen. Dabei wandelt sich das hochfrequente, modulierte Körperschallsignal in ein niederfrequentes Nutzsignal mit einfach auszuwertenden Merkmalen, welche die Geschwindigkeitsinformation tragen. Die Auswertung des niederfrequenten Nutzsignals erfolgt im Controller des Airbag-Steuergerätes, das gewöhnlich nur geringe Rechenleistungen bereitstellen kann.

Für eine Realisierung sind prinzipiell verschiedene Ansätze denkbar. Ausgehend von zwei parallel erzeugten Schwingungen überlagern sich diese aufgrund der Linearitätseigenschaften des Systems additiv zu einer Resultierenden

$$x(t) = x_O(t) + x_U(t).$$

Eine Nutzung rein harmonischer Signale und der damit verbundenen Konzentration der Information auf eine einzelne Frequenz (vgl. Fig. 3a) erscheint weniger geeignet, da der mechanische Übertragungskanal starkes Eigenverhalten mit Resonanz- und Antiresonanzstellen aufweist, die zu Auslöschungen des Signals führen können. Eine verbesserte Form der Anregung besteht daher aus zwei synchronen Sweep-Signalen (vgl. Fig. 3b) mit für $v_r$ = const. linear ansteigender bzw. linear abfallender Frequenz

$$x_O(t) = \sin\left(2\pi(f_{A,O}\, t + \frac{\Delta f_O}{\Delta t}\, t^2)\right) \quad \text{mit} \quad \Delta f_O > 0\,,$$

$$x_U(t) = \sin\left(2\pi(f_{A,U}\, t + \frac{\Delta f_U}{\Delta t}\, t^2)\right) \quad \text{mit} \quad \Delta f_U < 0\,.$$

Abbildung 10a) stellt die Anregung mit kontinuierlich veränderter Frequenz und gegenläufiger Charakteristik im Frequenz-Zeit-Diagramm dar. Die mechanische Anregung kann beispielsweise durch die Abtastung einer wellenförmigen Oberflächenstruktur erfolgen, wie in Fig. 10b skizzenhaft angedeutet ist.

Mit dem Übergang in die Geschwindigkeitsabhängigkeit erhält man aus den vorgenannten Gleichungen mit

$s_{A,O}$ und $s_{A,U}$ der initialen geometrischen Periode des aufsteigenden und absteigenden Sweeps sowie $\Delta s_O/\Delta x = (s_{A,O}-S_{E,O})/\Delta x$ und $\Delta s_U/\Delta x = (s_{A,U}-S_{E,U})/\Delta x$ deren geometrischer Steigungen die beiden folgenden Ausdrücke.

$$x_O(t) = \sin\left(2\pi\left(\frac{v_r}{s_{A,O}}\,t + \frac{\Delta x\,v_r^2}{\Delta s_O}\,t^2\right)\right) \quad \text{mit} \quad \frac{\Delta s_O}{\Delta x} > 0$$

$$x_U(t) = \sin\left(2\pi\left(\frac{v_r}{s_{A,U}}\,t + \frac{\Delta x\,v_r^2}{\Delta s_U}\,t^2\right)\right) \quad \text{mit} \quad \frac{\Delta s_U}{\Delta x} < 0.$$

Die Startfrequenzen entsprechen demnach dem Zusammenhang $f_{A,O} = v_r/s_{A,O}$ und $f_{A,U} = v_r/s_{A,U}$, während die Frequenzsteigungen von den geometrischen Steigungen und dem Geschwindigkeitsquadrat nach $\Delta f_O/\Delta t = \Delta x v_r^2/\Delta s_O$, $\Delta f_U/\Delta t = \Delta x v_r^2/\Delta s_U$ abhängen.

Die gegenläufigen Funktionen der Schwingfrequenzen $f_O(t)$ und $f_U(t)$ ergeben sich danach

zu $f_O(t) = v_r/s_{A,O} + (\Delta x\, v_r^2\, /\Delta s_O)\, t$ und $f_U(t) = v_r/s_{A,U} + (\Delta x\, v_r^2/s_U)\, t$.

Abbildung 6 zeigt die resultierenden Amplitudenspektren der Anregungen für die Geschwindigkeiten der Lastfälle ODB ($v_r$ = 64km/h) und AZT ($v_r$ = 16km/h). Neben der Mittenfrequenz ändert sich die Breite des angeregten Frequenzbandes proportional mit der Geschwindigkeit. Anhand der gewählten Parameter kann die Anregung an die Gegebenheiten von Fahrzeug und Messtechnik angepasst werden, beispielsweise kann so der begrenzte Frequenzbereich eines Sensors für die Serienanwendung berücksichtigt werden.

Das messbare Körperschallsignal ist im Allgemeinen für eine direkte Erfassung und Verarbeitung im Controller des Steuergerätes eventuell zu breitbandig. Eine Quadratur des erfassten Signals noch im Sensor, welche einer Demodulation des Informationssignals entspricht, löst vorzugsweise das Problem. Es ergibt sich

$y^2 = (x1 + x2)^2 = (\sin(2\pi\, f_O(t)\, t) + \sin(2\pi\, f_U(t)\, t))^2$.

Unter Vernachlässigung der quadratischen Terme entstehen dabei ein Summen- sowie ein Differenzsignal. Die breitbandig über die Karosserie übertragenen Informationen gehen in einen hochfrequenten Anteil mit $f_O+f_U$ und einen niederfrequenten Anteil mit $f_O-f_U$ über:

$y^2 \approx \cos(2\pi\,(f_O(t) - f_U(t))\, t) - \cos(2\pi\,(f_O(t) + f_U(t))\, t)$

Die Fig. 7 verdeutlicht dies an einer Messung für ODB 64km/h und AZT 16km/h. Durch Demodulation mit Hilfe der Quadratur lässt sich die hochfrequente Nutzinformation in den niedrigeren Frequenzbereich bringen. Auf diese Weise können die Vorteile der störunabhängigen Übertragung im hochfrequenten Bereich mit der geringen Bandbreite bzw. Abtastrate des Airbag-Steuergerätes vereint werden.

Durch Tiefpassfilterung (TPF in Fig. 7) wird der hochfrequente Anteil eliminiert. Der niederfrequente Anteil kann problemlos an das Steuergerät übertragen bzw. dort mittels A/D-Wandlung eingelesen und ausgewertet werden. Seine Frequenzfunktion $f_D(t)$ ergibt sich mit $|\Delta s| = |\Delta s_i|$, $i \in \{O.U\}$ zu

$$f_D(t) = f_O(t) - f_U(t) = v_r\left(\frac{1}{s_{A,O}} - \frac{1}{s_{A,U}}\right) + 2\,v_r^2\,\frac{\Delta x}{|\Delta s|}\,t.$$

Es stellt sich demnach ein mit der Differenz der beiden Startfrequenzen beginnender Frequenzverlauf dar, welcher mit der doppelten Steigung der beiden Sweeps vor der Demodulation ansteigt. Unter Nutzung der durch die mechanische Realisierung der Anregung festen und bekannten Parameter lässt sich damit auf die Crashgeschwindigkeit zurückschließen.

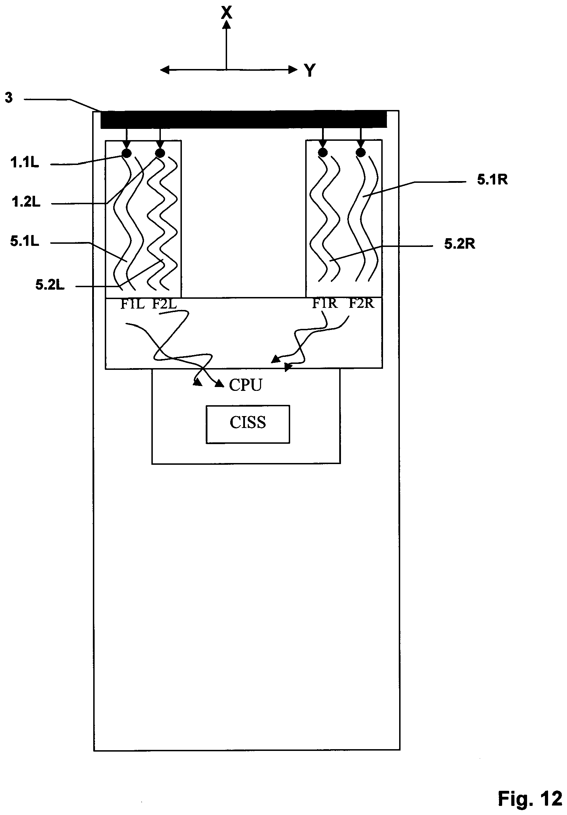

Figur 12 skizziert nun noch ein Kraftfahrzeug mit einer besonders bevorzugten Weiterbildung der erfindungsgemäßen Aufprallerkennungsvorrichtung. Dazu ist in einem ersten Bereich, hier beispielsweise dem linken Bereich L des Fahrzeugs, eine ersten Körperschallerzeugungsvorrichtung mit zwei Körperschall-anregenden Einheiten (1.1L+5.1L,1.2L+5.2L) bestehend zur mechanischen Erzeugung zweier unterscheidbarer deterministischer Körperschallschwingungen vorgesehen. Diese Körperschall-anregenden Einheiten bilden sich vorzugsweise wieder aus einem schwingungsfähigen Element 1.1L, welches analog zu Figur 9 in einer Wellenstruktur 5.1L kontinuierlich zwangsgeführt in Querrichtung Y senkrecht zur Führungsrichtung X ausgelenkt wird. Die Wellenstruktur 5.1L ist dabei von der Wellenstruktur 5.2L unterscheidbar, hat hier beispielsweise die doppelte Periodendauer. Prallt nun ein Kollisionsobjekt auf den Prallfänger 3 und schiebt somit die schwingungsfähigen Elemente 1.1L und 1.2L in Aufprallrichtung -X, so kommt es zur Erzeugung zweier Körperschallschwingungen in Abhängigkeit von der Aufprallgeschwindigkeit, wobei die Körperschallschwingungen von 5.2L in etwa die doppelte Frequenz wie die durch 5.1L erzeugte Körperschallschwingung hat. Beide Körperschallschwingungen überlagern sich in der Fahrzeugstruktur und gelangen zum Körperschallsensor CISS in der zentralen Auswerteeinheit.

In einem räumlich davon beabstandeten zweiten Bereich des Fahrzeugs, hier dem rechten Fahrzeugvorderraum, ist eine zweite Körperschallerzeugungsvorrichtung mit nochmals zwei Körperschall-anregenden Einheiten 1.1R+5.1R,1.2R+5.2R zur Erzeugung zweier weiterer, deterministischer Körperschallschwingungen F1L,F2L vorgesehen.

Die Wellenstrukturen 5.1R und 5.2R sind sowohl voneinander als auch von den Wellenstrukturen 5.1L und 5.2L der ersten (linken) Körperschallerzeugungsvorrichtung unterscheidbar. Auch diese Körperschallschwingungen F1R und F2R überlagern sich in der Fahrzeugstruktur und gelangen zum Körperschallsensor CISS in der zentralen Auswerteeinheit. Insgesamt entsteht also ein Überlagerungssignal aus 4 unterscheidbaren Körperschallsignalen, von denen jeweils 2 aufgrund ihrer im Wesentlichen identischen Position der Erzeugung identisch durch die Aufprall-geschwindigkeit überlagert sind. Während jedoch bei einem Frontalaufprall alle 4 Körperschall anregenden Einheiten nahezu die gleiche Aufprallgeschwindigkeit wahrnehmen, kommt es im Falle eines Schrägaufpralls oder seitlich versetzten Aufpralls zu einer ungleichmäßigen Belastung am Prallfänger 3 und damit zu einer unterscheidbaren Aufprallgeschwindigkeit zwischen den rechten und linken Körperschallerzeugungsvorrichtungen. Daraus kann vorzugsweise auch der Ort des Aufpralls abgeleitet werden.

In Figur 12 wurde zur einfachen visuellen Erkennbarkeit dabei eine Wellenstruktur 5 skizziert, die selbst verständlich nur skizzenhaft, also insbesondere in den gewählten Periodendauern und der Stärke der Auslenkung in Y-Richtung nicht der technischen Realität entspricht, sondern so weit vergrößert wurde, dass die Unterscheidbarkeit der Wellenstrukturen 5.1R, 5.2R, 5.1L und 5.2L auch mit bloßem Auge sichtbar ist. Zudem wurden wieder Schwingungen verwendet, da diese mit den verfügbaren Zeichenprogrammen leichter in unterschiedlicher Periodendauer darstellbar sind. Selbst verständlich eignen sich für eine praktische Ausgestaltung insbesondere die bevorzugten rampenförmig frequenzveränderten Körperschallsignale (Doppel-Sweep), die bereits eingangs erwähnt und sind die Auslenkung Y-Richtung nur einige Mikrometer bzw. Millimeter groß. Da für die Verarbeitbarkeit der Signale aber zudem die Signalübertragungseigenschaften des Fahrzeugs sehr entscheidend sind, erfolgt die Festlegung konkreter Maße für die Y-Auslenkung und Periodendauer vorzugsweise in Versuchen anhand dieser Fahrzeugstruktur.

**Patentansprüche**

1. Verfahren zur Aufprallerkennung bei Kraftfahrzeugen mit mindestens einer Körperschallerzeugungseinrichtung angeordnet im äußeren Bereich des Fahrzeugs zur gezielten Anregung von Körperschall beim Aufprall auf ein Hindernis und zumindest einem Sensor zur Erfassung von Körperschall,
wobei die Körperschallerzeugungseinrichtung eine erste Körperschall-anregende Einheit (1a,2a,5.1L,5.1R) zur mechanischen Erzeugung des ersten deterministischen Körperschallsignals und eine davon unterschiedliche zweite Körperschall-anregende Einheit (1b,2b,5.2L,5.2R) zur Erzeugung des zweiten deterministischen Körperschallsignals aufweist,
wobei beim Aufprall des Fahrzeugs zumindest zwei deterministische Körperschallsignale ($X_1(t),X_2(t),F1L,F2L,F1R,F2R$) erzeugt werden, welche voneinander unterscheidbar sind, und diese Körperschallsignale vom Sensor (CISS) erfasst werden
**dadurch gekennzeichnet, dass**
wobei die jeweils angeregte Frequenz der Körperschallschwingungen abhängig von der Deformationsgeschwindigkeit der Körperschallerzeugungseinrichtung ist und aus diesen Körperschallsignalen die Aufprallgeschwindigkeit ermittelt wird.

2. Verfahren nach Anspruch 1, **dadurch gekennzeichnet, dass** die Körperschallschwingungen eine gemeinsame Grundfrequenz (f0) und voneinander abweichende Modulationen dieser Grundfrequenz aufweisen.

3. Verfahren nach Anspruch 2, **dadurch gekennzeichnet, dass** aus den Körperschallschwingungen die Grundfrequenz (f0) ermittelt und aus dieser die Aufprallgeschwindigkeit ermittelt wird.

4. Verfahren nach einem der vorangehenden Ansprüche, **dadurch gekennzeichnet, dass** die zumindest zwei Körperschallschwingungen durch Frequenzmodulation mit jeweils einem fest vorgegebenen unterscheidbaren Frequenzfaktor (Fig.3a) erzeugt werden.

5. Verfahren nach einem der vorangehenden Ansprüche 1 bis 3, **dadurch gekennzeichnet, dass** die zumindest zwei Körperschallschwingungen durch Frequenzmodulation als Frequenzrampe mit einander entgegen gesetzter Flankenrichtung (Fig.3b) aus der Grundfrequenz erzeugt werden.

6. Verfahren nach einem der vorangehenden Ansprüche, **dadurch gekennzeichnet, dass** die zumindest zwei Körperschallschwingungen bei der Übertragung durch die Fahrzeugkarosserie überlagert und das so am Körperschallsensor empfangene Signal quadriert und ein vorgegebener Frequenzanteil dieses quadrierten Signals, vorzugsweise ausschließlich der dabei entstehende niederfrequente Signalanteil, ausgewertet wird.

7. Verfahren nach einem der vorangehenden Ansprüche, **dadurch gekennzeichnet, dass** die Aufprallgeschwindigkeit durch Frequenzanalyse mit Hilfe von einem oder mehreren Bandpassfiltern (Fig.8) ermittelt wird.

8. Verfahren nach einem der vorangehenden Ansprüche 1 bis 6, **dadurch gekennzeichnet, dass** die Aufprallgeschwindigkeit durch Ableitung des gemessenen oder eines daraus abgeleiteten Signals und anschließende Amplitudenbewertung ermittelt wird.

9. Verfahren nach einem der vorangehenden Ansprüche 1 bis 6, **dadurch gekennzeichnet, dass**

- ein Teil des gemessenen oder eines daraus abgeleiteten Signals phasenverschoben und
- dieses phasenverschobene Signal mit dem ursprünglich gemessenen Signal komplex addiert wird,
- anschließend eine Ableitung des Phasenwinkels erfolgt und aus der Phasenwinkeländerung auf die Aufprallgeschwindigkeit geschlossen wird.

10. Verfahren nach einem der vorangehenden Ansprüche 1 bis 6, **dadurch gekennzeichnet, dass** die Aufprallgeschwindigkeit durch Frequenzanalyse mit Hilfe eines Zählers von Nullstellen des demodulierten Signals ermittelt wird.

11. Verfahren nach einem der vorangehenden Ansprüche **dadurch gekennzeichnet, dass** eine Wichtung dieses gemessenen Signals mit der inversen Übertragungsfunktion des Fahrzeugs vom Ort der Körperschallerzeugungseinrichtung bis zur Sensierungs- und Auswerteeinheit erfolgt.

12. Körperschallerzeugungseinrichtung zur Durchführung eines Verfahrens nach einem der vorangehenden Ansprüche, wobei die Körperschallerzeugungseinrichtung eine erste Körperschall-anregende Einheit (1a,2a,5.1L,5.1R) zur mechanischen Erzeugung eines ersten deterministischen Körperschallsignals ($X_1$(t),F1L,F1R) und eine davon unterschiedliche zweite Körperschall-anregende Einheit (1b,2b,5.2L,5.2R) zur Erzeugung eines zweiten deterministischen Körperschallsignals ($X_2$(t),F2L,F2R) aufweist und die Körperschallschwingungen ($X_1$(t),$X_2$(t),F1L,F2L,F1R,F2R) zudem voneinander unterscheidbar sind, **dadurch gekennzeichnet, dass** die jeweils angeregte Frequenz der Körperschallschwingungen abhängig von der Deformationsgeschwindigkeit der Körperschallerzeugungseinrichtung ist

13. Körperschallerzeugungseinrichtung nach Anspruch 12, wobei die Steifigkeit der Körperschallerzeugungseinrichtung gleich oder kleiner der Steifigkeit des Biegequerträgers, der Deformationselemente und der nachgelagerten Fahrzeugstruktur ist.

14. Kraftfahrzeug zur Durchführung eines Verfahrens nach einem der vorangehenden Ansprüche 1 bis 11 mit zumindest einer Körperschallerzeugungsvorrichtung nach einem der Ansprüche 12 bis 13, wobei

- mindestens eine Körperschallerzeugungsvorrichtung im äußeren, beispielsweise vorderen Bereich des Fahrzeugs vorgesehen ist, welche zumindest zwei voneinander unterscheidbaren Körperschallschwingungen in Abhängigkeit der Aufprallgeschwindigkeit des Fahrzeugs auf ein Hindernis erzeugt, wobei die jeweils angeregte Frequenz der Körperschallschwingungen abhängig von der Deformationsgeschwindigkeit der Körperschallerzeugungseinrichtung

- eine Sensor- und Auswerteeinrichtung vorgesehen ist, die erzeugten Signale aufnimmt und daraus die Aufprallgeschwindigkeit ermittelt

15. Kraftfahrzeug nach Anspruch 14, **dadurch gekennzeichnet, dass**

- in einem ersten Bereich (L) des Fahrzeugs eine ersten Körperschallerzeugungsvorrichtung mit zwei Körperschall-anregenden Einheiten (1.1L+5.1L,1.2L+5.2L) zur mechanischen Erzeugung zweier unterscheidbarer deterministischer Körperschallschwingungen vorgesehen ist
- und in einem räumlich davon beabstandeten zweiten Bereich (R) des Fahrzeugs eine zweite Körperschallerzeugungsvorrichtung mit nochmals zwei Körperschall-anregenden Einheiten (1.1R+5.1R,1.2R+5.2R) zur Erzeugung zweier weiterer, voneinander als auch von denen der ersten Körperschallerzeugungsvorrichtung unterscheidbarer deterministischer Körperschallschwingungen vorgesehen ist.

## Claims

1. A method for impact recognition in motor vehicles having at least one structure-borne sound generator arranged in the outer part of the vehicle for the specific generation of structure-borne sound when hitting an obstacle and at least one sensor for detecting structure-borne sound,
   wherein the structure-borne sound generator comprises a first structure-borne sound exciting unit (1a, 2a, 5.1L, 5.1R) for mechanically generating the first deterministic structure-borne sound signal and a different second structure-borne sound exciting unit (1b, 2b, 5.2L, 5.2R) for generating the second deterministic structure-borne sound signal, wherein at the time of impact of the vehicle at least two deterministic structure-borne sound signals ($X_1(t)$, $X_2(t)$, F1L, F2L, F1R, F2R) are generated, which are distinguishable from one another and said structure-borne sound signals are detected by the sensor (CISS),
   **characterised in that**
   the respectively excited frequency of the structure-borne sound vibrations is dependent on the deformation speed of the structure-borne sound generator and the impact speed is determined from said structure-borne sound signals.

2. The method according to claim 1, **characterised in that** the structure-borne sound vibrations have a common basic frequency (f0) and different modulations of said basic frequency.

3. The method according to claim 2, **characterised in that** from the structure-borne sound vibrations the basic frequency (f0) is determined and the impact speed is determined from the latter.

4. The method according to any one of the preceding claims, **characterised in that** the at least two structure-borne sound vibrations are generated by frequency modulation, each with a fixed predefined distinguishable frequency factor (Fig. 3a).

5. The method according to any one of the preceding claims 1 to 3, **characterised in that** the at least two structure-borne sound vibrations are generated from the basic frequency by frequency modulation as a frequency ramp with a flank direction opposite to that of the basic frequency (Fig. 3b).

6. The method according to any one of the preceding claims, **characterised in that** the at least two structure-borne sound vibrations are superimposed during transmission by the vehicle body and the signal received at the structure-borne sound sensor is squared and a predefined frequency portion of said squared signal, preferably only the thereby generated low frequency signal portion, is evaluated.

7. The method according to any one of the preceding claims, **characterised in that** the impact speed is determined by frequency analysis by means of one or more bandpass filters (Fig. 8).

8. The method according to any one of the preceding claims 1 to 6, **characterised in that** the impact speed is determined by deriving the measured signal, or a signal derived from the latter, and subsequent amplitude evaluation.

9. The method according to any one of the preceding claims 1 to 6, **characterised in that**

- a portion of the measured signal, or of a signal derived from the latter, is phase-shifted and
- said phase-shifted signal is added to the originally measured signal in a complex manner,

- afterwards the phase angle is derived and the impact speed is determined from the change in the phase angle.

10. The method according to any one of the preceding claims 1 to 6, **characterised in that** the impact speed is determined by frequency analysis by means of a counter of zero points of the demodulated signal.

11. The method according to any one of the preceding claims, **characterised in that** a weighting of said measured signal is performed by the inverse transmission function of the vehicle from the site of the structure-borne sound generator to the sensing and evaluation unit.

12. A structure-borne sound generator for performing a method according to any one of the preceding claims, wherein the structure-borne sound generator comprises a first structure-borne sound exciting unit (1a, 2a, 5.1L, 5.1R) for mechanically generating a first deterministic structure-borne sound signal ($X_1$(t), F1L, F1R) and a different second structure-borne sound exciting unit (1b, 2b, 5.2L, 5.2R) for generating a second deterministic structure-borne sound signal ($X_2$(t), F2L, F2R) and the structure-borne sound vibrations ($X_1$(t), $X_2$(t), F1L, F2L, F1R, F2R) are also distinguishable from one another,
**characterised in that**
the respectively excited frequency of the structure-borne sound vibrations is dependent on the deformation speed of the structure-borne sound generator.

13. The structure-borne sound generator according to claim 12, wherein the rigidity of the structure-borne sound generator is equal to or less than the rigidity of the flexible cross-member, the deformation elements and the downstream vehicle structure.

14. A motor vehicle for performing a method according to any one of the preceding claims 1 to 11, comprising at least one structure-borne sound generator according to any one of claims 12 to 13, wherein

- at least one structure-borne sound generator is provided in the outer, for example front, part of the vehicle, which generates at least two distinguishable structure-borne sound vibrations as a function of the impact speed of the vehicle against an obstacle, wherein the respectively excited frequency of the structure-borne sound vibrations is dependent on the deformation speed of the structure-borne sound generator
- a sensor and evaluation device is provided which receives the generated signals and from the latter determines the impact speed.

15. The motor vehicle according to claim 14, **characterised in that**

- in a first part (L) of the vehicle a first structure-borne sound generator is provided having two structure-borne sound exciting units (1.1L + 5.1L, 1.2L + 5.2L) for mechanically generating two distinguishable deterministic structure-borne sound vibrations
- and in a second part (R) of the vehicle spaced apart from the latter a second structure-borne sound generator is provided having two further structure-borne sound exciting units (1.1R + 5.1R, 1.2R + 5.2R) for generating two further deterministic structure-borne sound vibrations distinguishable from one another and also from those of the first structure-borne sound generator.

**Revendications**

1. Procédé pour la détection d'impact sur des véhicules avec au moins un dispositif de génération de bruits de structure disposé dans la zone extérieure du véhicule pour l'excitation ciblée de bruits de structure lors de l'impact sur un obstacle et avec au moins un capteur pour la détection de bruits de structure,
le dispositif de génération de bruits de structure présentant une première unité d'excitation de bruits de structure (1a,2a,5.1L,5.1R) pour la génération mécanique du premier signal de bruits de structure déterministe et une unité d'excitation de bruits de structure (1b,2b,5.2L,5.2R) pour la génération du deuxième signal de bruits de structure déterministe,
lors de l'impact du véhicule, au moins deux signaux de bruits de structure déterministes ($X_1$(t),$X_2$(t),F1L,F2L,F1R,F2R) étant générés, lesquels sont distincts l'un de l'autre, et ces signaux de bruits de structure étant détectés par le capteur (CISS),
**caractérisé en ce que**
la fréquence des vibrations de bruits de structure excitée respectivement dépend de la vitesse de déformation du dispositif de génération de bruits de structure et la vitesse d'impact étant déterminée à partir de ces signaux de bruits de structure.

2. Procédé selon la revendication 1, **caractérisé en ce que** les vibrations de bruits de structure présentent une fréquence de base commune (f0) et des modulations de cette fréquence de base différant les unes des autres.

3. Procédé selon la revendication 2, **caractérisé en ce que** la fréquence de base (f0) est déterminée à partir des vibrations de bruits de structure, et **en ce que** la vitesse d'impact est déterminée à partir de cette fréquence.

4. Procédé selon l'une des revendications précédentes, **caractérisé en ce que** les au moins deux vibrations de bruits de structure sont générées par modulation de fréquence avec respectivement un facteur de fréquence distinct prédéterminé de façon fixe (Fig.3a).

5. Procédé selon l'une des revendications précédentes 1 à 3, **caractérisé en ce que** les au moins deux vibrations de bruits de structure sont générées par modulation de fréquence à partir de la fréquence de base, comme rampe de fréquence avec direction de flanc opposée l'une à l'autre (Fig.3b).

6. Procédé selon l'une des revendications précédentes, **caractérisé en ce que** les au moins deux vibrations de bruits de structure sont superposées lors du transfert à travers la carrosserie du véhicule, et **en ce que** le signal ainsi reçu par le capteur de bruits de structure est élevé au carré, et **en ce qu'**une composante de fréquence prédéterminée de ce signal au carré, de préférence uniquement la composante de signal à basse fréquence obtenue ainsi, est analysée.

7. Procédé selon l'une des revendications précédentes, **caractérisé en ce que** la vitesse d'impact est déterminée par analyse de fréquences, à l'aide d'un ou de plusieurs filtres passe-bande (Fig.8).

8. Procédé selon l'une des revendications 1 à 6, **caractérisé en ce que** la vitesse d'impact est déterminée par dérivation du signal mesuré ou d'un signal dérivé de celui-ci, et par analyse d'amplitude subséquente.

9. Procédé selon l'une des revendications précédentes 1 à 6, **caractérisé en ce que**

- une partie du signal mesuré ou d'un signal dérivé à partir de celui-ci est déphasée, et
- ce signal déphasé est ajouté par calcul complexe au signal mesuré à l'origine,
- ensuite, une dérivation de l'angle de phase est effectuée et la vitesse d'impact est déduite à partir de la modification de l'angle de phase.

10. Procédé selon l'une des revendications précédentes 1 à 6, **caractérisé en ce que** la vitesse d'impact est déterminée par analyse de fréquences, à l'aide d'un compteur de zéros du signal démodulé.

11. Procédé selon l'une des revendications précédentes, **caractérisé en ce qu'**une pondération de ce signal mesuré est effectuée avec la fonction de transfert inverse du véhicule, de l'emplacement du dispositif de génération de bruits de structure jusqu'à l'unité de détection et d'analyse.

12. Dispositif de génération de bruits de structure pour la réalisation d'un procédé selon l'une des revendications précédentes, le dispositif de génération de bruits de structure présentant une première unité d'excitation de bruits de structure (1a,2a,5.1L,5.1R) pour la génération mécanique d'un premier signal de bruits de structure déterministe ($X_1(t)$,F1L,F1R) et une unité d'excitation de bruits de structure (1b,2b,5.2L,5.2R), différant de celle-ci, pour la génération d'un deuxième signal de bruits de structure déterministe ($X_2(t)$,F2L,F2R), et les vibrations de bruits de structure ($X_1(t)$,$X_2(t)$,F1L,F2L,F1R,F2R) étant en outre distinctes les unes des autres, **caractérisé en ce que** la fréquence des vibrations de bruits de structure excitée respectivement dépend de la vitesse de déformation du dispositif de génération de bruits de structure.

13. Dispositif de génération de bruits de structure selon la revendication 12, la rigidité du dispositif de génération de bruits de structure étant égale ou inférieure à la rigidité du pare-chocs, des éléments de déformation et de la structure du véhicule en amont.

14. Véhicule pour la réalisation d'un procédé selon l'une des revendications précédentes 1 à 11 avec au moins un dispositif de génération de bruits de structure selon l'une des revendications 12 à 13,

- au moins un dispositif de génération de bruits de structure étant prévu dans la zone extérieure, par exemple avant, du véhicule, lequel dispositif génère au moins deux vibrations de bruits de structure distinctes l'une de l'autre en fonction de la vitesse d'impact du véhicule sur un obstacle, la fréquence des vibrations de bruits de structure excitée respectivement dépendant de la vitesse de déformation du dispositif de génération de bruits de structure,

- un dispositif de détection et d'analyse étant prévu, lequel enregistre les signaux générés et détermine la vitesse d'impact à partir de ceux-ci.

**15.** Véhicule à moteur selon la revendication 14, **caractérisé en ce que**

- dans une première zone (L) du véhicule, un dispositif de génération de bruits de structure est prévu avec deux unités d'excitation de bruits de structure (1.1L+5.1L,1.2L+5.2L) pour la production mécanique de deux vibrations de bruits de structure déterministe distinctes l'une de l'autre,

- et, dans une deuxième zone du véhicule (R) à distance de celle-ci, un deuxième dispositif de génération de bruits de structure est prévu, avec de nouveau deux unités d'excitation de bruits de structure (1.1R+5.1R,1.2R+5.2R) pour la génération de deux autres vibrations déterministes distinctes aussi bien l'une de l'autre que de celles du premier dispositif de génération de bruits de structure.

**Fig. 1a**

Kollisionsobjekt

**Fig. 1b**

Kollisionsobjekt

**Fig. 1c**

Fig. 1d

Fig. 1e

f1(t)

f2(t)

**Fig. 2**

Frequenz f

X₁(t)

X₂(t)

Zeit t

**Fig. 3a**

Frequenz f

X₁(t)

f₀

X₂(t)

Zeit t

**Fig. 3b**

aCISS-
Anregung

aCISS-
Übertragung

Verarbeitung in Sensor und / oder ECU

$x_1$ →

$x_n$ →

+

x

TF

Messung

y

Verknüpfung
(Vorverarbeitung)

Auswertung

→ ~ $v_{rel}$

mechan.
Überlagerung

Fahrzeugstruktur

KS-
Sensor

**Fig. 4**

A
U
F
P
R
A
L
L

Erzeugung zweier unterscheidbar
modulierter Körperschallsignale im
Aufprall

Modulation 1

+

Modulation 2

Optionale
Vorverarbeitung

Demodulation

Auswertungsoptionen

| Filterband-
bewertung | Nullstellen
- zähler | Frequenz-
Amplituden-
Transformation | Phasenbewertung |

$V_{rel}$

**Fig. 5**

Fig. 6

Fig. 7

Fig. 8

**Fig. 9a**

Schnitt A-A'

**Fig. 9b**

Schnitt B-B'

**Fig. 9c**

**Fig. 9d**

**Fig. 10**

**Fig. 11a**

$A_x(t)$

$A_x(f)$

**Fig. 11c**

**Fig. 11b**

$A_x(t)$

$A_x(f)$

**Fig. 11d**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008020186 A1
- DE 102008002549 A1
- DE 102008020186
- DE 10245780 A1